# EUROPÄISCHE PATENTSCHRIFT

(11) **EP 2 633 276 B1**
(45) Veröffentlichungstag und Bekanntmachung des Hinweises auf die Patenterteilung: **05.08.2020**
(21) Anmeldenummer: 11749455.9
(22) Anmeldetag: 02.09.2011
(51) Int. Cl.: G01F 1/684, G01F 15/02

(54) **SENSORVORRICHTUNG ZUR ERFASSUNG EINER STRÖMUNGSEIGENSCHAFT EINES FLUIDEN MEDIUMS**
SENSOR DEVICE FOR DETECTING A FLOW PROPERTY OF A FLUID MEDIUM
DISPOSITIF CAPTEUR POUR DÉTECTER UNE PROPRIÉTÉ D'ÉCOULEMENT D'UN MILIEU FLUIDE

(30) Priorität: 28.10.2010 DE 102010043062
(43) Veröffentlichungstag der Anmeldung: 04.09.2013
(73) Patentinhaber: Robert Bosch GmbH, 70442 Stuttgart (DE)
(72) Erfinder: SCHNEIDER, Norbert, 75233 Tiefenbronn (DE); ETHERINGTON, Kurt, 70771 Leinfelden-Echterdingen (DE); RILLING, Heinz, 71735 Eberdingen (DE); KONZELMANN, Uwe, 71679 Asperg (DE); KAUFMANN, Andreas, 71522 Backnang (DE); RITTMANN, Michael, 71254 Ditzingen (DE); STARK, Andreas, 98724 Lauscha (DE); BEYRICH, Hans, 71691 Freiberg/N (DE)
(86) Internationale Anmeldenummer: PCT/EP2011/065206
(87) Internationale Veröffentlichungsnummer: WO 2012/055621

(56) Entgegenhaltungen:
- EP-A1- 2 154 494
- US-A1- 2008 163 683
- US-B1- 7 243 541

## Beschreibung

### Stand der Technik

Aus dem Stand der Technik sind zahlreiche Verfahren und Vorrichtungen zur Bestimmung von Strömungseigenschaften fluider Medien, also von Flüssigkeiten und/oder Gasen, bekannt. Bei den Strömungseigenschaften kann es sich dabei um grundsätzlich beliebige physikalisch und/oder chemisch messbare Eigenschaften handeln, welche eine Strömung des fluiden Mediums qualifizieren oder quantifizieren. Insbesondere kann es sich dabei um eine Strömungsgeschwindigkeit und/oder einen Massenstrom und/oder einen Volumenstrom handeln. Die Erfindung wird im Folgenden insbesondere beschrieben unter Bezugnahme auf so genannte Heißfilmluftmassenmesser, wie sie beispielsweise in Robert Bosch GmbH: Sensoren im Kraftfahrzeug, Ausgabe 2007, Seiten 140-142 beschrieben sind. Derartige Heißfilmluftmassenmesser basieren in der Regel auf einem Sensorchip, insbesondere einem Silicium-Sensorchip, mit einer Messoberfläche, welche von dem strömenden fluiden Medium überströmbar ist. Der Sensorchip umfasst in der Regel mindestens ein Heizelement sowie mindestens zwei Temperaturfühler, welche beispielsweise auf der Messoberfläche des Sensorchips angeordnet sind. Aus einer Asymmetrie des von den Temperaturfühlern erfassten Temperaturprofils, welches durch die Strömung des fluiden Mediums beeinflusst wird, kann auf einen Massenstrom und/oder Volumenstrom des fluiden Mediums geschlossen werden. Heißfilmluftmassenmesser sind üblicherweise als Steckfühler ausgestaltet, welcher fest oder austauschbar in ein Strömungsrohr einbringbar ist. Beispielsweise kann es sich bei diesem Strömungsrohr um einen Ansaugtrakt einer Brennkraftmaschine handeln. Aus der EP 2 154 494 A1, US 2008/0163683 A1, US 7 243 541 B1 sind weitere Sensorvorrichtungen zur Erfassung einer Strömungseigenschaft eines fluiden Mediums bekannt.

Um aus den Sensorsignalen des Heißfilmluftmassenmessers präzise auf bestimmte Strömungseigenschaften des fluiden Mediums schließen zu können, ist es in vielen Fällen wünschenswert, weitere Informationen über das fluide Medium bereitstellen zu können. So wird beispielsweise in EP 1 017 931 B1 ein Sensor für eine Brennkraftmaschine vorgeschlagen, welcher einen Luftmassenmesser mit einem Sensorelement zur Erfassung der angesaugten Luftmasse aufweist. Benachbart zu dem Luftmassenmesser und dessen Sensorelement sind ein Feuchtesensor und ein Drucksensor sowie eine Auswerteschaltung zur Verarbeitung der von dem Luftmassenmesser bzw. dessen Sensorelement, dem Feuchtesensor und dem Drucksensor ausgegebenen Daten vorgesehen und in einem einzigen Gehäuse angeordnet.

Trotz der technischen Verbesserungen, welche durch die in der EP 1 017 931 B1 beschriebene Vorrichtung erzielbar sind, insbesondere der verbesserten Signalgenauigkeit und der Möglichkeit, weitere Eigenschaften des strömenden fluiden Mediums zu bestimmen, sind derartige kombinierte Sensoren mit verschiedenen technischen Herausforderungen behaftet. Diese Herausforderungen sind insbesondere konstruktiver und produktionstechnischer Natur. So sind Heißfilmluftmassenmesser bereits seit vielen Jahren kommerziell verfügbar und in zahlreichen Kraftfahrzeugen im Einsatz. Die Integration von Druck- und Feuchtesensoren in Heißfilmluftmassenmesser-Steckfühler, wie in der EP 1 017 931 B1 vorgeschlagen, macht jedoch in vielen Fällen eine Anpassung der Geometrie und des Designs der Steckfühler erforderlich. Bereits im Einsatz befindliche Steckfühler sind somit nicht oder nur schwer durch neue Steckfühler mit Druck- und Feuchtesensoren ersetzbar, da grundsätzlich das gesamte Modul ausgetauscht werden müsste. Weiterhin müssen Produktionsanlagen in vielen Fällen vollständig umgestellt und neu organisiert werden, sobald Steckfühler mit zusätzlicher Druck- und Feuchtemessung hergestellt werden sollen. Insbesondere das kombinierte Elektronikmodul mit Druck- und Feuchtesensor, wie in der EP 1 017 931 B1 vorgeschlagen, erfordert eine erhebliche Anpassung des Produktions- und Bestückungsvorgangs. Hierdurch wird ein Vorhalten äußerlich kompatibler Steckfühler unterschiedlicher Funktionalität, also von Steckfühlern mit Druck- und Feuchtemessung und Steckfühlern ohne eine derartige Druck- und Feuchtemessung, aus Kostengründen praktisch nicht realisierbar. Wünschenswert wäre daher eine Sensorvorrichtung zur Erfassung einer Strömungseigenschaft eines fluiden Mediums, welche eingerichtet ist, auch Druck- und Temperatursignale zu generieren und welche auf einfache und kostengünstige Weise herstellbar ist, unter möglichst geringer Modifikation bekannter Herstellungsverfahren für Steckfühler ohne derartige Druck- und Feuchtemessungen.

### Offenbarung der Erfindung

Es wird dementsprechend eine Sensorvorrichtung zur Erfassung mindestens einer Strömungseigenschaft eines strömenden fluiden Mediums vorgeschlagen, welche diesen Anforderungen zumindest weitgehend genügt und welche die Nachteile bekannter Sensorvorrichtungen dieser Art zumindest weitgehend vermeidet. Diese Aufgabe wird durch die im Anspruch 1 angeführten Merkmale gelöst. Vorteilhafte Weiterentwicklungen der Erfindung sind in den Unteransprüchen angegeben.

Bezüglich der mindestens einen zu erfassenden Strömungseigenschaft, welche qualitativ und/oder quantitativ erfasst werden kann, kann beispielsweise auf die obige Beschreibung des Standes der Technik verwiesen werden. Insbesondere kann es sich bei dieser Strömungseigenschaft um eine Strömungsgeschwindigkeit und/oder einen Massenstrom und/oder einen Volumenstrom des fluiden Mediums handeln. Bei dem fluiden Medium kann es sich insbesondere um ein Gas, vorzugsweise um Luft handeln. Die Sensorvorrichtung ist insbesondere einsetzbar in der Kraftfahrzeugtechnik, beispielsweise im Ansaugtrakt einer Verbrennungsmaschine. Auch andere Einsatzgebiete sind jedoch grundsätzlich möglich.

Die Sensorvorrichtung umfasst mindestens ein Sensorgehäuse. Unter einem Sensorgehäuse ist dabei im Rahmen der vorliegenden Erfindung eine einteilige oder auch mehrteilige Vorrichtung zu verstehen, welche die Sensorvorrichtung nach außen zumindest weitgehend abschließt und zumindest weitgehend schützt gegenüber mechanischen Einwirkungen und vorzugsweise auch anderen Arten von Einwirkungen, beispielsweise chemischen Einwirkungen und/oder Feuchteeinwirkungen. Insbesondere umfasst das Sensorgehäuse mindestens einen Steckfühler oder ist als Steckfühler ausgestaltet, wobei der Steckfühler in das strömende fluide Medium einbringbar ist, wobei eine austauschbare oder auch eine permanente Einbringung denkbar ist. Der Steckfühler kann beispielsweise in ein Strömungsrohr des strömenden fluiden Mediums hineinragen, wobei das Strömungsrohr selbst Bestandteil der Sensorvorrichtung sein kann oder auch als separates Teil vorgesehen werden kann, beispielsweise mit einer Öffnung, in welche der Steckfühler einbringbar ist. Der Steckfühler und das Strömungsgehäuse können insbesondere zumindest teilweise aus einem Kunststoffmaterial hergestellt sein, beispielsweise mittels eines Spritzgussverfahrens.

In dem Sensorgehäuse ist mindestens ein Elektronikmodul mit mindestens einem Strömungssensor zur Erfassung der Strömungseigenschaft aufgenommen. Unter einer Aufnahme in dem Sensorgehäuse ist dabei zu verstehen, dass das Elektronikmodul zumindest teilweise, vorzugsweise vollständig, von dem Sensorgehäuse umschlossen sein soll. Insbesondere ist das Elektronikmodul, wie unten noch näher ausgeführt wird, in einem Elektronikraum des Sensorgehäuses angeordnet, welcher beispielsweise als Hohlraum in dem Sensorgehäuse ausgestaltet sein kann und welcher vorzugsweise durch mindestens einen Elektronikraumdeckel oder eine andere Verschlussvorrichtung verschließbar ausgestaltet sein kann.

Unter einem Strömungssensor ist dabei grundsätzlich ein beliebiges Sensorelement zu verstehen, welches zur Erfassung der mindestens einen Strömungseigenschaft ausgestaltet ist. Insbesondere kann es sich bei dem Strömungssensor um mindestens einen Heißfilmluftmassenmesserchip handeln, beispielsweise der oben beschriebenen Art. Insbesondere kann dieser Heißfilmluftmassenmesserchip mindestens einen Siliciumchip umfassen, mit einer Messoberfläche, welche von dem strömenden fluiden Medium überströmbar ist. Auf dieser Sensoroberfläche können sich beispielsweise mindestens ein Heizelement und mindestens zwei Temperaturfühler befinden, wobei, wie oben beschrieben, aus einer Asymmetrie des mittels der Temperaturfühler gemessenen Temperaturprofils auf die mindestens eine Strömungseigenschaft schließbar sein kann. Der mindestens eine Strömungssensor kann beispielsweise auf einem Sensorträger des Elektronikmoduls angeordnet sein, welcher in das strömende fluide Medium hineinragt. Das Elektronikmodul kann insbesondere einteilig ausgestaltet sein und kann insbesondere eine Ansteuer- und/oder Auswerteschaltung tragen, welche eingerichtet ist, um den Strömungssensor anzusteuern und/oder Signale des Strömungssensors aufzunehmen. Dementsprechend kann das Elektronikmodul beispielsweise mindestens einen Schaltungsträger aufweisen. Weiterhin kann das Elektronikmodul insbesondere den mindestens einen Sensorträger aufweisen, welcher mit dem Schaltungsträger vorzugsweise mechanisch verbunden ist. Beispielsweise kann der Schaltungsträger in einem Elektronikraum des Sensorgehäuses angeordnet sein, und der Sensorträger kann aus diesem Elektronikraum heraus in das fluide Medium hineinragen. Besonders bevorzugt ist es, wenn das Sensorgehäuse mindestens einen von dem fluiden Medium durchströmbaren Kanal aufweist, wobei der Sensorträger des Elektronikmoduls, welcher den Strömungssensor trägt, aus dem Elektronikraum in den mindestens einen von dem fluiden Medium durchströmbaren Kanal in dem Sensorgehäuse ragt. Dieser mindestens eine Kanal kann insbesondere einteilig ausgestaltet sein, kann jedoch auch mindestens einen Hauptkanal und mindestens einen von diesem Hauptkanal abzweigenden Bypasskanal aufweisen, wobei der Sensorträger vorzugsweise in den Bypasskanal hineinragt, wie dies grundsätzlich aus dem Stand der Technik bekannt ist. Der Schaltungsträger des Elektronikmoduls kann insbesondere eine Leiterplatte umfassen, welche in Alleinstellung verwendet wird oder welche beispielsweise auch auf einem mechanischen Träger montiert ist, beispielsweise einem Stanz-Biege-Teil, beispielsweise aus einem metallischen Werkstoff. Der Sensorträger kann mit dem Schaltungsträger unmittelbar verbunden sein oder auch mit dem Trägerteil, beispielsweise dem Stanz-Biege-Teil, beispielsweise indem der Sensorträger an dieses Stanz-Biege-Teil angespritzt ist. Auch andere Ausgestaltungen sind möglich. So ist beispielsweise denkbar, das Elektronikmodul aus einem Leiterplattenmaterial herzustellen, wobei sowohl der Schaltungsträger als auch der Sensorträger aus dem Leiterplattenmaterial hergestellt sind, vorzugsweise aus einem Stück des Leiterplattenmaterials. Wiederum alternativ oder zusätzlich ist es auch möglich, aus dem Stand der Technik bekannte spritzgegossene Leiterplatten als Elektronikmodul zu verwenden, beispielsweise spritzgegossene Leiterplatten in einer oder mehreren so genannten MID-Techniken (MID: molded interconnect device). Verschiedene Ausgestaltungen sind denkbar.

Die Sensorvorrichtung weist weiterhin mindestens einen Drucksensor und mindestens einen Feuchtesensor auf. Der Drucksensor und der Feuchtesensor sind innerhalb des Sensorgehäuses angeordnet. Unter einer Anordnung innerhalb des Sensorgehäuses ist wiederum eine Anordnung zu verstehen, bei welcher sowohl der Drucksensor als auch der Feuchtesensor zumindest teilweise von dem Sensorgehäuse umschlossen sind, vorzugsweise vollständig. Beispielsweise können der Drucksensor und der Feuchtesensor jeweils oder gemeinsam in mindestens einem Innenraum, beispielsweise wiederum dem Elektronikraum, des Sensorgehäuses aufgenommen sein, wobei der Innenraum vorzugsweise für eine Bestückung geöffnet werden kann und vorzugsweise anschließend verschlossen werden kann, beispielsweise wiederum durch einen Elektronikraumdeckel und/oder ein anderes Verschlusselement.

Unter einem Drucksensor ist dabei grundsätzlich ein beliebiges Sensorelement zu verstehen, welches eingerichtet ist, um einen Druck des fluiden Mediums zu erfassen. Insbesondere kann es sich hierbei um einen mikromechanischen Drucksensor handeln, wie er beispielsweise in Robert Bosch GmbH: Sensoren im Kraftfahrzeug, Seiten 128-130 beschrieben ist. Auch andere Arten von Drucksensoren sind jedoch alternativ oder zusätzlich einsetzbar, beispielsweise Drucksensoren, welche unmittelbar auf der Verwendung eines oder mehrerer Dehnungsmessstreifen oder ähnlichen Drucksensorelementen basieren.

Unter einem Feuchtesensor ist grundsätzlich ein beliebiges Sensorelement zu verstehen, welches eingerichtet ist, um eine Feuchtigkeit des fluiden Mediums zu erfassen. Beispielsweise kommen hierbei resistive und/oder kapazitive Sensorelemente in Betracht, wie sie aus dem Stand der Technik bekannt sind. Beispiele derartiger Feuchtigkeitssensoren sind in Robert Bosch GmbH: Sensoren im Kraftfahrzeug, Ausgabe 2007, Seiten 92-95 beschrieben. Auch andere Arten von Feuchtesensoren kommen jedoch grundsätzlich alternativ oder zusätzlich für den Einsatz im Rahmen der vorliegenden Erfindung in Betracht.

Erfindungsgemäß wird zur Lösung der oben beschriebenen Problematik vorgeschlagen, dass zumindest der Drucksensor und vorzugsweise auch der Feuchtesensor unabhängig von dem Elektronikmodul in dem Sensorgehäuse angeordnet sind. Unter einer unabhängigen Anordnung des Drucksensors und vorzugsweise auch des Feuchtesensors von dem Elektronikmodul ist dabei eine Anordnung zu verstehen, bei welcher der Drucksensor und vorzugsweise der Feuchtesensor unabhängig von dem Elektronikmodul in das Sensorgehäuse einbringbar sind. Beispielsweise können das Elektronikmodul und der Drucksensor und vorzugsweise auch der Feuchtesensor unabhängige Baugruppen voneinander bilden, wobei der Drucksensor und der Feuchtesensor getrennt voneinander ausgebildet sein können, wobei diese jedoch auch eine gemeinsame Baugruppe bilden können. Insbesondere können der Drucksensor und vorzugsweise auch der Feuchtesensor sowie das Elektronikmodul an unterschiedlichen Verbindungsstellen mit dem Gehäuse verbunden sein. Beispielsweise kann eine Bestückung des Sensorgehäuses derart erfolgen, dass zunächst der Drucksensor und vorzugsweise auch der Feuchtesensor in das Sensorgehäuse eingebracht werden, beispielsweise einen Elektronikraum und/oder einen anderen Raum des Sensorgehäuses, wobei anschließend das Elektronikmodul eingebracht wird, oder umgekehrt.

Das Sensorgehäuse weist mindestens einen Elektronikraum auf, wobei das Elektronikmodul zumindest teilweise in dem Elektronikraum aufgenommen ist. Ein Teil des Elektronikmoduls kann dabei auch aus dem Elektronikraum herausragen, wie beispielsweise der Sensorträger, welcher beispielsweise in einen Kanal in dem Sensorgehäuse hineinragen kann. Der Drucksensor und auch der Feuchtesensor sind in diesem Elektronikraum unabhängig von dem Elektronikmodul angeordnet.

Das Elektronikmodul und der Drucksensor sowie auch der Feuchtesensor sind in unterschiedlichen Montageebenen in dem Sensorgehäuse und in dem Elektronikraum aufgenommen. Wie oben beschrieben, sind der Drucksensor und auch der Feuchtesensor in einer ersten Montageebene in dem Elektronikraum angeordnet, und das Elektronikmodul ist in einer darüber oder darunter liegenden Ebene des Elektronikraums angeordnet.

Auf diese Weise kann beispielsweise eine sukzessive Bestückung des Elektronikraums mit dem Drucksensor sowie vorzugsweise auch dem Feuchtesensor und anschließend oder zuvor mit dem Elektronikmodul vorgenommen werden.

Das Sensorgehäuse kann insbesondere mindestens eine Drucköffnung aufweisen, insbesondere einen Druckstutzen, wobei der Drucksensor derart in dem Sensorgehäuse aufgenommen ist, dass dieser über die Drucköffnung mit einem Druck des fluiden Mediums beaufschlagbar ist. Beispielsweise kann, wie oben beschrieben, der Drucksensor in einem Elektronikraum des Sensorgehäuses angeordnet sein, in welchem auch vorzugsweise das Elektronikmodul aufgenommen ist. Der Elektronikraum kann beispielsweise von einer ersten Seite des Sensorgehäuses aus bestückbar sein, beispielsweise nach Abnehmen eines Elektronikraumdeckels oder vor Anfügen eines Elektronikraumdeckels. Die Drucköffnung kann insbesondere aus dem Elektronikraum heraus führen und kann beispielsweise auf einer der ersten Seite gegenüberliegenden zweiten Seite des Sensorgehäuses angeordnet sein.

Das Sensorgehäuse kann mindestens eine Einlassöffnung für Feuchtigkeit aufweisen, insbesondere mindestens einen Einlassstutzen für Feuchtigkeit. Der Feuchtesensor kann derart in dem Sensorgehäuse aufgenommen sein, dass dieser über die Einlassöffnung mit Feuchtigkeit beaufschlagbar ist. Die Einlassöffnung kann insbesondere mindestens ein Rückhalteelement aufweisen, insbesondere mindestens eine Membran, wobei das Rückhalteelement für Feuchtigkeit zumindest teilweise durchlässig ist. Beispielsweise kann dieses Rückhalteelement die mindestens eine Einlassöffnung vollständig oder teilweise überspannen und kann vorzugsweise derart eingerichtet sein, dass dieses zumindest gröbere Verunreinigungen wie Staubpartikel, Schmutz, Flüssigkeitstropfen oder ähnliche größere Verunreinigungen, beispielsweise mit einer Größe von mehr als 0,2 mm, vorzugsweise von mehr als 0,5 mm, zurückhält, wohingegen Feuchtigkeit des fluiden Mediums, beispielsweise Luftfeuchtigkeit, das Rückhalteelement durchdringen kann. Das Rückhalteelement kann insbesondere mindestens eine feuchtigkeitsdurchlässige Membran, beispielsweise eine Kunststoffmembran, und/oder mindestens ein Gewebe, beispielsweise mindestens ein Netz, umfassen.

Der Feuchtesensor kann insbesondere in einem Elektronikraum des Sensorgehäuses angeordnet sein, wobei der Feuchtesensor von einer ersten Seite des Sensorgehäuses aus bestückbar ist, beispielsweise nach Abnehmen und/oder vor Aufbringen eines Elektronikraumdeckels. Die Einlassöffnung kann, analog zur Drucköffnung, insbesondere auf einer der ersten Seite gegenüberliegenden zweiten Seite des Sensorgehäuses angeordnet sein. Beispielsweise können die Drucköffnung und/oder die Einlassöffnung auf einer dem Elektronikraumdeckel gegenüberliegenden Seite des Gehäuses angeordnet sein. Beispielsweise kann der Steckfühler an seinem am weitesten in das fluide Medium hineinragenden Ende eine Kopfseite aufweisen, an seiner dem strömenden fluiden Medium entgegenweisenden Seite eine Stirnseite, und auf der der Stirnseite gegenüberliegenden Seite eine Rückseite, wobei die erste Seite und die zweite Seite vorzugsweise Seitenwände bilden, welche im Wesentlichen parallel zur Strömung des fluiden Mediums angeordnet sein können und welche von dem strömenden fluiden Medium überströmt werden können. Die Drucköffnung und/oder die Einlassöffnung können auf einer dieser Seitenwände angeordnet sein.

Die Sensorvorrichtung kann darüber hinaus auch ein oder mehrere weitere Sensorelemente umfassen, zur Erfassung mindestens einer weiteren physikalischen und/oder chemischen Eigenschaft des fluiden Mediums. Insbesondere kann die Sensorvorrichtung weiterhin mindestens einen Temperaturfühler aufweisen, insbesondere mindestens einen auf einer Außenseite des Sensorgehäuses angeordneten Temperaturfühler. Beispielsweise kann ein Temperaturfühler derart auf einer Außenseite des Sensorgehäuses angeordnet sein, dass dieser auf derselben Seite angeordnet ist wie auch die Einlassöffnung für die Feuchtigkeit und/oder die Drucköffnung. Auch eine andere Ausgestaltung ist jedoch grundsätzlich möglich. Insbesondere kann der Temperaturfühler in mindestens einer Vertiefung auf einer Seitenwand des Steckfühlers angeordnet sein. Der Temperaturfühler kann insbesondere mindestens einen temperaturabhängigen Widerstand umfassen. Alternativ oder zusätzlich sind auch andere Arten von Temperaturfühlern einsetzbar. Der Temperaturfühler kann insbesondere frei von dem strömenden fluiden Medium überströmbar sein, also nicht von dem Gehäuse des Sensorelements umschlossen sein. Der Temperaturfühler kann insbesondere durch einen Kraftschluss und/oder Formschluss mit dem Gehäuse verbunden sein, beispielsweise indem Zuleitungen des Temperaturfühlers mit einer Außenwand des Sensorgehäuses verstemmt oder auf andere Weise verbunden sind. Zuleitungen des Temperaturfühlers können insbesondere ins Innere des Sensorgehäuses hineingeführt sein und dort beispielsweise mit dem Elektronikmodul verbunden sein und/oder mit einem Steckverbinder der Sensorvorrichtung verbunden sein. Verschiedene andere Ausgestaltungen sind denkbar.

Die Sensorvorrichtung kann weiterhin derart ausgestaltet sein, dass mindestens eine Zuleitung des Feuchtesensors und mindestens eine Zuleitung des Drucksensors und optional mindestens eine Zuleitung des Temperaturfühlers elektrisch zusammengefasst sind. Diese Zusammenfassung kann beispielsweise innerhalb des Sensorgehäuses und/oder innerhalb eines Steckers der Sensorvorrichtung erfolgen. Beispielsweise können eine Masseleitung und/oder eine Versorgungsleitung für den Drucksensor und den Feuchtesensor zusammengefasst sein.

In einem weiteren Aspekt der vorliegenden Erfindung wird ein Verfahren zur Herstellung einer Sensorvorrichtung zur Erfassung mindestens einer Strömungseigenschaft eines fluiden Mediums vorgeschlagen. Bei dieser Sensorvorrichtung handelt es sich um eine Sensorvorrichtung gemäß einer oder mehreren der oben beschriebenen Ausgestaltungen. Dementsprechend kann für mögliche Ausgestaltungen der Sensorvorrichtung auf die obige Beschreibung verwiesen werden oder auf die nachfolgende Beschreibung der bevorzugten Ausführungsbeispiele. Die Sensorvorrichtung umfasst mindestens ein Sensorgehäuse. Bei dem Verfahren wird mindestens ein Elektronikmodul mit mindestens einem Strömungssensor zur Erfassung der Strömungseigenschaft in das Sensorgehäuse eingebracht. Weiterhin werden bei dem Verfahren mindestens ein Drucksensor und mindestens ein Feuchtesensor in das Sensorgehäuse eingebracht. Zumindest der Drucksensor und auch der Feuchtesensor werden dabei unabhängig von dem Elektronikmodul in das Sensorgehäuse eingebracht. Die Einbringung des Elektronikmoduls und die Einbringung des Drucksensors sowie auch die Einbringung des Feuchtesensors erfolgen in unterschiedlichen Bestückungsschritten, beispielsweise indem zunächst der Drucksensor und vorzugsweise auch der Feuchtesensor in das Sensorgehäuse eingebracht werden, und anschließend das Elektronikmodul, oder umgekehrt.

Die oben beschriebene Sensorvorrichtung und das oben beschriebene Verfahren weisen gegenüber bekannten Sensorvorrichtungen und Verfahren zahlreiche Vorteile auf. Insbesondere sind die Sensorvorrichtung und das Verfahren geeignet, die Nachteile bekannter Vorrichtungen und Verfahren zumindest weitgehend zu vermeiden. Die Sensorvorrichtung kann insbesondere von ihren äußeren Dimensionen her im Wesentlichen kompatibel mit herkömmlichen Sensorvorrichtungen ohne Drucksensor und ohne Feuchtesensor ausgestaltet werden. Insbesondere können Steckfühler hergestellt werden, welche sich, unabhängig davon, ob diese nun einen Drucksensor und einen Feuchtesensor enthalten oder nicht, in ihren äußeren Abmessungen gleich verhalten. Weiterhin können Sensorvorrichtungen der genannten Art mit und ohne Drucksensoren bzw. Feuchtesensoren auf ein und derselben Fertigungslinie gefertigt werden wie auch Sensorvorrichtungen, welche keine derartigen Druck- und/oder Feuchtesensoren umfassen. Auf diese Weise wird eine Produktion, eine Logistik und eine Lagerhaltung der beschriebenen Sensorvorrichtungen deutlich vereinfacht. Insbesondere kann ein Elektronikraum des Sensorgehäuses derart ausgestaltet werden, dass dieser sowohl ohne den Drucksensor bzw. ohne den Feuchtesensor als auch mit diesen Sensoren eingesetzt werden kann. Alternativ können verschiedene Sensorgehäuse vorgehalten werden, welche sich praktisch ausschließlich in der Ausgestaltung des Elektronikraums unterscheiden, indem beispielsweise für Sensorvorrichtungen mit Drucksensor und Feuchtesensor zusätzliche Aufnahmen für diese Sensoren im Elektronikraum vorgesehen werden, und indem in anderen Sensorgehäusen keine derartigen Aufnahmen vorgesehen werden. Insgesamt lassen sich hierdurch Konstruktion, Fertigung, Logistik und Lagerhaltung deutlich vereinfachen und verbessern, und die Sensorvorrichtungen lassen sich erheblich kostengünstiger ausgestalten. Außerdem besteht die Möglichkeit, auch bereits vorhandene, konventionelle Sensorvorrichtungen ohne Druck- und Feuchtesensoren durch erfindungsgemäße Sensorvorrichtungen auszutauschen.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:
- Figur 1: eine herkömmliche Sensorvorrichtung zur Erfassung mindestens einer Strömungseigenschaft eines fluiden Mediums; und
- Figuren 2A und 2B: verschiedene Ansichten einer erfindungsgemäßen Ausführungsform einer Sensorvorrichtung.

### Ausführungsformen der Erfindung

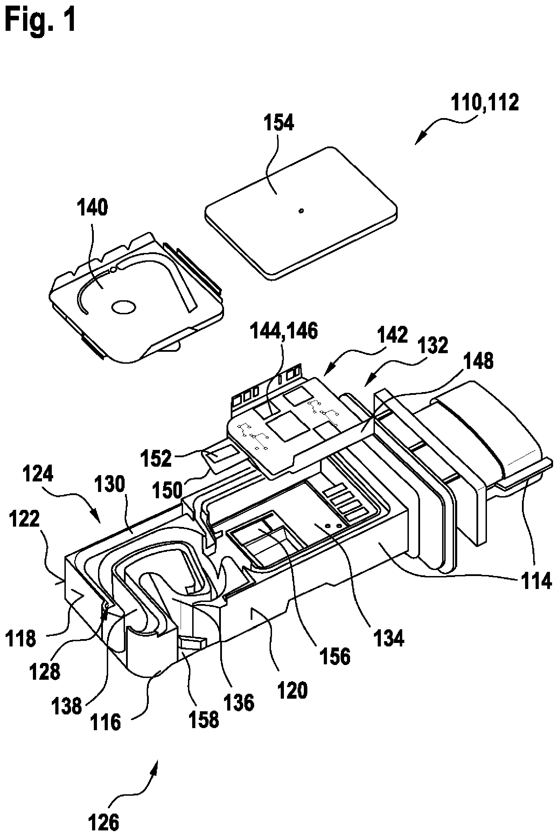

In Figur 1 ist ein dem Stand der Technik entsprechendes Ausführungsbeispiel einer Sensorvorrichtung 110 zur Erfassung mindestens einer Strömungseigenschaft eines fluiden Mediums in einer perspektivischen, geöffneten Darstellung gezeigt. Die Sensorvorrichtung 110 ist in diesem Ausführungsbeispiel als Heißfilmluftmassenmesser 112 ausgestaltet und umfasst einen Steckfühler 114, welcher in eine Strömung des fluiden Mediums, beispielsweise eine Ansaugluftmasse, einbringbar ist, beispielsweise reversibel einsteckbar in ein Ansaugrohr oder permanent installiert. Der Heißfilmluftmassenmesser 112 entspricht einem kommerziell erhältlichen Luftmassensensor vom Typ HFM7 der Robert Bosch GmbH, Deutschland. Der Steckfühler 114 umfasst ein Sensorgehäuse 116, mit einer am weitesten in das fluide Medium hineinragenden Kopfseite 118, einer dem fluiden Medium entgegenweisenden Stirnseite 120, einer dem fluiden Medium abgewandten Rückseite 122 und zwei Seitenflächen in Form einer ersten Seite 124 und einer zweiten Seite 126, wobei in der Darstellung gemäß Figur 1 die erste Seite 124 erkennbar ist.

Innerhalb des Sensorgehäuses 116 ist ein Kanalbereich 128 mit mindestens einem von dem fluiden Medium durchströmbaren Kanal 130 und ein Elektronikbereich 132 mit einem in das Sensorgehäuse 116 eingelassenen Elektronikraum 134 aufgenommen. Der Kanal 130 weist seinerseits einen Hauptkanal 136 und einen Bypasskanal 138 auf. Der Kanalbereich 128 ist durch einen Kanalraumdeckel 140 auf der ersten Seite 124 verschließbar. In dem Elektronikraum 134 ist ein Elektronikmodul 142 aufgenommen, welches einen Schaltungsträger 144 mit einer Ansteuer- und/oder Auswerteschaltung 146 umfasst, der beispielsweise auf einem Bodenblech 148 aufgenommen sein kann. Weiterhin umfasst das Elektronikmodul 142 einen Sensorträger 150 in Form eines an das Bodenblech 148 angespritzten Flügels, welcher in den Bypasskanal 138 hineinragt. In den Sensorträger 150 ist ein Strömungssensor 152 in Form eines Heißfilmluftmassenmesserchips eingelassen. Der Elektronikraum 134 ist auf der ersten Seite 124 durch einen Elektronikraumdeckel 154 verschließbar. Weiterhin kann das Sensorgehäuse 116 auf der zweiten Seite 126 eine Kühlöffnung 156 umfassen, die sich in den Elektronikraum 134 hinein erstrecken kann.

Bei der kommerziell verfügbaren Ausgestaltung der Sensorvorrichtung 110 gemäß Figur 1 bilden der Sensorträger 150 und das Bodenblech 148 somit eine Einheit des Elektronikmoduls 142. Zusätzlich zum Strömungssensor 152 wird noch die Elektronik des Schaltungsträgers 144 und der Ansteuer- und/oder Auswerteschaltung 146 auf das Bodenblech 148 aufgeklebt. Der Strömungssensor 152 und die Ansteuer- und/oder Auswerteschaltung 146 werden in der Regel durch Bondverbindungen miteinander verbunden. Das so entstandene Elektronikmodul 142 wird beispielsweise in den Elektronikraum 134 eingeklebt, und der gesamte Steckfühler 114 wird durch die Deckel 140, 154 verschlossen.

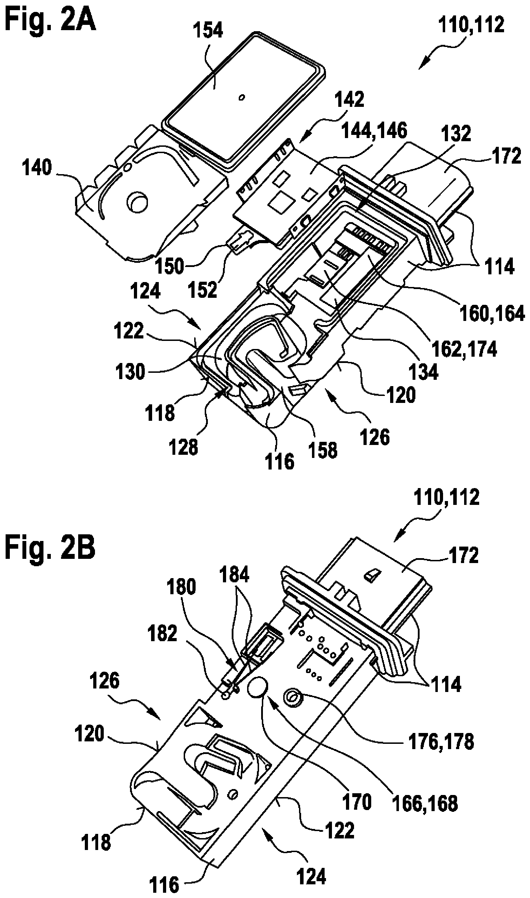

In den Figuren 2A und 2B ist hingegen ein erfindungsgemäßes Ausführungsbeispiel einer Sensorvorrichtung 110 gezeigt. Wiederum handelt es sich exemplarisch um einen Heißfilmluftmassenmesser 112, welcher zunächst grundsätzlich ähnlich zu der Sensorvorrichtung 110 gemäß Figur 1 ausgestaltet ist. Dementsprechend kann für weite Teile auf die Beschreibung der Figur 1 verwiesen werden. Dabei zeigt Figur 2A eine geöffnete perspektivische Ansicht der ersten Seite 124, wohingegen Figur 2B eine perspektivische Ansicht der zweiten Seite 126 zeigt.

Wiederum umfasst der Heißfilmluftmassenmesser 112 einen Steckfühler 114 mit einem Sensorgehäuse 116. In dem Sensorgehäuse 116 ist wiederum ein Kanalbereich 128 vorgesehen, analog zu dem Steckfühler 114 gemäß Figur 1, mit einem Kanal 130, in welchen über eine auf einer Stirnseite 120 des Steckfühlers 114 vorgesehene Kanaleinlassöffnung 158 fluides Medium einströmen kann. Weiterhin ist wiederum ein Elektronikraum 134 in einem Elektronikbereich 132 vorgesehen, in welchem ein Elektronikmodul 142 mit einem Strömungssensor 152 vorgesehen ist. Diesbezüglich kann zumindest weitgehend auf die obige Beschreibung verwiesen werden. Der Kanalbereich 128 ist wiederum durch einen Kanalraumdeckel 140 verschließbar, und der Elektronikraum 134 durch einen Elektronikraumdeckel 154. Auch andere Ausgestaltungen sind grundsätzlich möglich.

Bei der Sensorvorrichtung 110 gemäß den Figuren 2A und 2B sind zusätzlich ein Feuchtesensor 160 und ein Drucksensor 162 in dem vorhandenen Bauraum integriert. Dabei kann es sich bei dem Feuchtesensor 160 und/oder dem Drucksensor 162 jeweils um einzelne Sensoren handeln oder Sensormodule. Beispielsweise kann der Feuchtesensor 160 als Feuchtemodul 164 ausgestaltet sein. Der Feuchtesensor 160 und der Drucksensor 162 können dabei getrennt voneinander ausgebildet sein, können jedoch grundsätzlich auch zusammengefasst ausgebildet werden.

Der Aufbau der Sensorvorrichtung 110 in dem Ausführungsbeispiel gemäß den Figuren 2A und 2B erfolgt in diesem Ausführungsbeispiel in zwei Montageebenen. Dabei werden der Feuchtesensor 160 und der Drucksensor 162 in einer ersten Montageebene im Bodenbereich des Elektronikraums 134 angeordnet, unterhalb einer zweiten Montageebene, in welcher das Elektronikmodul 142 angeordnet ist. Dieser zweilagige Aufbau wird insbesondere durch den bevorzugten Entfall der Kühlöffnung 156 ermöglicht. Die Montage des Drucksensors 162 und des Feuchtesensors 160 im Steckfühler 114 erfolgen bevorzugt auf einer separaten Fertigungslinie. Das so vormontierte Steckfühlermodul kann dann auf einer existierenden Serieneinrichtung weiterverarbeitet werden, beispielsweise einer Serieneinrichtung zur Montage der Steckfühler 114 gemäß Figur 1.

Wie oben beschrieben, ist der Feuchtesensor 160 auf einem Feuchtemodul 164 integriert. Dieses Feuchtemodul 164 kann beispielsweise eine Leiterplatte als Schaltungsträger umfassen, auf welcher sich dann der eigentliche Feuchtesensor 160 und gegebenenfalls ein oder mehrere elektronische Komponenten, wie insbesondere Auswerteschaltkreise, befinden können.

Weiterhin umfasst das Sensorgehäuse 116 des Ausführungsbeispiels gemäß Figur 2A auf der zweiten Seite 126 eine Einlassöffnung 166 für Feuchtigkeit, insbesondere in Form eines Feuchtestutzens 168. Diese Einlassöffnung 166 kann durch mindestens ein Rückhalteelement 170, insbesondere eine semipermeable Membran, verschlossen sein. Über den Feuchtestutzen 168 ist der Feuchtesensor 160 mit der Umgebung verbunden. Das Rückhalteelement 170 dient dem Schutz vor eindringendem Wasser oder Schmutz, ist jedoch für Feuchte durchlässig. Das Feuchtemodul 164 ist in das Sensorgehäuse 116 des Steckfühlers 114 eingeklebt. Die Verbindung des Feuchtemoduls 164 zu einem Stecker 172 des Steckfühlers 114 erfolgt vorzugsweise durch Bondverbindungen. Als Drucksensor 162 kann beispielsweise ein mikromechanischer Drucksensor verwendet werden, welcher beispielsweise wiederum auch in einem Drucksensormodul 174 integriert sein kann. Beispielsweise kann als Drucksensor 162 der Premold des kommerziell erhältlichen Drucksensors vom Typ DS-S3 der Robert Bosch GmbH, Deutschland, verwendet werden. Der Drucksensor 162 kann insbesondere neben dem Feuchtemodul 164 montiert werden und ist wiederum mit dem Sensorgehäuse 116 durch eine Klebeverbindung verbunden. Auch andere

Ausgestaltungen sind jedoch grundsätzlich möglich. Wiederum kann eine Kontaktierung des Drucksensors 162 und eine elektrische Verbindung mit dem Stecker 172 erfolgen, beispielsweise durch eine Schweißverbindung. Auch andere Ausgestaltungen sind jedoch möglich. Der Drucksensor 162 kann durch eine Drucköffnung 176 mit Druck beaufschlagt werden, beispielsweise wiederum in Form eines Druckstutzens 178 auf der zweiten Seite 126. Die Montage des Elektronikmoduls 142 kann gemäß üblichen Montagetechniken erfolgen. Beispielsweise kann die Montage in einer zweiten Montageebene erfolgen, analog zu einer heutigen Serienfertigung, beispielsweise der Sensorvorrichtung 110 gemäß Figur 1.

Weiterhin ist in Figur 2B erkennbar, dass die Sensorvorrichtung 110 weitere Sensorelemente aufweisen kann. Als optionale Ausgestaltung weist die Sensorvorrichtung 110 gemäß Figur 2B auf der zweiten Seite 126 einen Temperaturfühler 180 auf. Dieser kann beispielsweise einen Messkopf 182 umfassen, sowie Zuleitungen 184, welche beispielsweise mit dem Sensorgehäuse 116 warmverstemmt sein können. Die Zuleitungen 184 können, wie in Figur 2B gezeigt, auch ins Innere des Sensorgehäuses 116 hineingeführt sein. Der Temperaturfühler 180 ist vorzugsweise vollständig dem fluiden Medium ausgesetzt.

Durch die Integration von Druck- und Feuchtemessungen innerhalb vorhandener Steckfühler 114 und dem dort vorhandenen Bauraum kann der erfindungsgemäße Steckfühler 114 gemäß den Figuren 2A und 2B insbesondere einbaukompatibel zu kommerziell bereits erhältlichen Steckfühlern 114 sein, beispielsweise gemäß Figur 1. Für den Benutzer sind dabei beim Einsatz derartiger erfindungsgemäßer Sensorvorrichtungen 110 in der Regel keine Änderungen am Ansaugtrakt erforderlich. Weiterhin reduzieren sich für den Benutzer die Kosten für den Kabelbaum durch einen Entfall von Gegensteckern und eine Reduktion von Kabeln durch die Möglichkeit einer Zusammenfassung von Leitungen. Beispielsweise können in dem gezeigten Ausführungsbeispiel oder auch in anderen Ausführungsbeispielen erfindungsgemäßer Sensorvorrichtungen 110 ein oder mehrere Leitungen des Feuchtesensors 160 und des Drucksensors 162 elektrisch zusammengefasst sein, beispielsweise Masse- und Versorgungsleitung für den Drucksensor 162 und das Feuchtemodul 164. Durch den Aufbau in mehreren Montageebenen kann die Montage des Drucksensors 162 und des Feuchtesensors 160 auf einer separaten Fertigungslinie erfolgen. Der weitere Aufbau kann auf vorhandenen Serieneinrichtungen erfolgen.

## Patentansprüche

1. Sensorvorrichtung (110) zur Erfassung mindestens einer Strömungseigenschaft eines
fluiden Mediums, umfassend mindestens ein Sensorgehäuse (116), mindestens ein Elektronikmodul (142), mindestens einen Strömungssensor (152), mindestens einen Drucksensor (162) und mindestens einen Feuchtesensor (160), wobei das Sensorgehäuse mindestens einen in das strömende fluide Medium einbringbaren Steckfühler umfasst,
wobei in dem Sensorgehäuse (116) mindestens ein Elektronikmodul (142) mit mindestens einem Strömungssensor (152) zur Erfassung der Strömungseigenschaft aufgenommen ist, insbesondere mindestens einem Heißfilmluftmassenmesserchip, wobei weiterhin innerhalb des Sensorgehäuses (116) mindestens ein Drucksensor (162) und mindestens ein Feuchtesensor (160) aufgenommen sind, wobei das Sensorgehäuse (116) mindestens einen Elektronikraum (134) aufweist, wobei das Elektronikmodul (142) zumindest teilweise in dem Elektronikraum (134) aufgenommen ist, wobei auch der Drucksensor (162) und der Feuchtesensor (160) in dem Elektronikraum (134) angeordnet sind,
**dadurch gekennzeichnet, dass** der Drucksensor (162) und der Feuchtesensor (160) unabhängig von dem Elektronikmodul (142) in dem Sensorgehäuse (116) angeordnet sind, wobei der Feuchtesensor (160) und der Drucksensor (162) in einer ersten Montageebene im Bodenbereich des Elektronikraums (134) unterhalb einer zweiten Montageebene, in welcher das Elektronikmodul (142) in dem Sensorgehäuse (116) angeordnet ist, in das Sensorgehäuse eingeklebt sind, und dass der Feuchtesensor (160) auf einem Feuchtemodul (164) integriert ist und das Feuchtemodul mit einem Stecker (172) des Steckfühlers (114) durch Bonddrahtverbindungen verbunden ist.

2. Sensorvorrichtung (110) nach Anspruch 1, wobei das Elektronikmodul (142) einen Sensorträger (150) umfasst, wobei der Sensorträger (150) den Strömungssensor (152) trägt und aus dem Elektronikraum (134) in mindestens einen von dem fluiden Medium durchströmbaren Kanal (130) in dem Sensorgehäuse (116) ragt.

3. Sensorvorrichtung (110) nach einem der vorhergehenden Ansprüche, wobei das Sensorgehäuse (116) mindestens eine Drucköffnung (176) aufweist, insbesondere mindestens einen Druckstutzen (178), wobei der Drucksensor (162) derart in dem Sensorgehäuse (116) aufgenommen ist, dass dieser über die Drucköffnung (176) mit einem Druck des fluiden Mediums beaufschlagbar ist.

4. Sensorvorrichtung (110) nach einem der vorhergehenden Ansprüche, wobei das Sensorgehäuse (116) mindestens eine Einlassöffnung (166) für Feuchtigkeit aufweist, wobei der Feuchtesensor (160) derart in dem Sensorgehäuse (116) aufgenommen ist, dass dieser über die Einlassöffnung (166) mit Feuchtigkeit beaufschlagbar ist.

5. Sensorvorrichtung (110) nach Anspruch 3 und 4, wobei der Elektronikraum (134) von einer ersten Seite (124) des Sensorgehäuses (116) aus mit dem Drucksensor, dem Feuchtemodul und dem Elektronikmodul bestückt ist, wobei die Drucköffnung (176) und die Einlassöffnung (166) auf einer gegenüberliegenden zweiten Seite (126) angeordnet sind.

6. Sensorvorrichtung (110) nach einem der vorhergehenden Ansprüche, wobei die Sensorvorrichtung (110) weiterhin mindestens einen Temperaturfühler (180) aufweist, insbesondere mindestens einen auf einer Außenseite des Sensorgehäuses (116) angeordneten Temperaturfühler (180).

7. Verfahren zur Herstellung einer Sensorvorrichtung (110) zur Erfassung mindestens einer Strömungseigenschaft eines fluiden Mediums nach einem der vorhergehenden Ansprüche, wobei die Sensorvorrichtung (110) mindestens ein Sensorgehäuse (116) umfasst, wobei das Sensorgehäuse mindestens einen in das strömende fluide Medium einbringbaren Steckfühler umfasst,
wobei mindestens ein Elektronikmodul (142) mit mindestens einem Strömungssensor (152) zur Erfassung der Strömungseigenschaft in das Sensorgehäuse (116) eingebracht wird, wobei weiterhin mindestens ein Drucksensor (162) und mindestens ein Feuchtesensor (160) in das Sensorgehäuse (116) eingebracht werden, wobei das Sensorgehäuse (116) mindestens einen Elektronikraum (134) aufweist, wobei das Elektronikmodul (142) zumindest teilweise in dem Elektronikraum (134) angeordnet wird, wobei auch der Drucksensor (162) und der Feuchtesensor (160) in dem Elektronikraum (134) angeordnet werden, wobei der Drucksensor (162) und der Feuchtesensor (160) unabhängig von dem Elektronikmodul (142) in das Sensorgehäuse (116) eingebracht werden, wobei der Feuchtesensor (160) und der Drucksensor (162) in einer ersten Montageebene im Bodenbereich des Elektronikraums (134) unterhalb einer zweiten Montageebene, in welcher das Elektronikmodul (142) in dem Sensorgehäuse (116) angeordnet wird, in das Sensorgehäuse eingeklebt werden, und wobei der Feuchtesensor (160) auf einem Feuchtemodul (164) integriert ist und das Feuchtemodul mit einem Stecker (172) des Steckfühlers (114)
durch Bonddrahtverbindungen
verbunden wird.

## Claims

1. Sensor apparatus (110) for capturing at least one flow property of a fluid medium, comprising at least one sensor housing (116), at least one electronics module (142), at least one flow sensor (152), at least one pressure sensor (162) and at least one moisture sensor (160), wherein the sensor housing comprises at least one plug-in sensor which can be introduced into the flowing fluid medium, wherein at least one electronics module (142) having at least one flow sensor (152) for capturing the flow property, in particular at least one hot film air mass meter chip, is accommodated in the sensor housing (116), wherein at least one pressure sensor (162) and at least one moisture sensor (160) are also accommodated inside the sensor housing (116), wherein the sensor housing (116) has at least one electronics compartment (134), wherein the electronics module (142) is at least partially accommodated in the electronics compartment (134), wherein the pressure sensor (162) and the moisture sensor (160) are also arranged in the electronics compartment (134),
**characterized in that** the pressure sensor (162) and the moisture sensor (160) are arranged independently of the electronics module (142) in the sensor housing (116), wherein the moisture sensor (160) and the pressure sensor (162) are adhesively bonded into the sensor housing on a first mounting level in the base area of the electronics compartment (134) below a second mounting level on which the electronics module (142) is arranged in the sensor housing (116), and **in that** the moisture sensor (160) is integrated in a moisture module (164) and the moisture module is connected to a connector (172) of the plug-in sensor (114) by means of bonding wire connections.

2. Sensor apparatus (110) according to Claim 1, wherein the electronics module (142) comprises a sensor carrier (150), wherein the sensor carrier (150) carries the flow sensor (152) and projects from the electronics compartment (134) into at least one channel (130), through which the fluid medium can flow, in the sensor housing (116).

3. Sensor apparatus (110) according to one of the preceding claims, wherein the sensor housing (116) has at least one pressure opening (176), in particular at least one pressure connecting piece (178), wherein the pressure sensor (162) is accommodated in the sensor housing (116) in such a manner that a pressure of the fluid medium can be applied to it via the pressure opening (176).

4. Sensor apparatus (110) according to one of the preceding claims, wherein the sensor housing (116) has at least one inlet opening (166) for moisture, wherein the moisture sensor (160) is accommodated in the sensor housing (116) in such a manner that moisture can be applied to it via the inlet opening (166) .

5. Sensor apparatus (110) according to Claims 3 and 4, wherein the electronics compartment (134) is fitted with the pressure sensor, the moisture module and the electronics module from a first side (124) of the sensor housing (116), wherein the pressure opening (176) and the inlet opening (166) are arranged on an opposite second side (126).

6. Sensor apparatus (110) according to one of the preceding claims, wherein the sensor apparatus (110) also has at least one temperature sensor (180), in particular at least one temperature sensor (180) arranged on an outer side of sensor housing (116).

7. Method for producing a sensor apparatus (110) for capturing at least one flow property of a fluid medium according to one of the preceding claims, wherein the sensor apparatus (110) comprises at least one sensor housing (116), wherein the sensor housing comprises at least one plug-in sensor which can be introduced into the flowing fluid medium, wherein at least one electronics module (142) having at least one flow sensor (152) for capturing the flow property is introduced into the sensor housing (116), wherein at least one pressure sensor (162) and at least one moisture sensor (160) are also introduced into the sensor housing (116), wherein the sensor housing (116) has at least one electronics compartment (134), wherein the electronics module (142) is at least partially arranged in the electronics compartment (134), wherein the pressure sensor (162) and the moisture sensor (160) are also arranged in the electronics compartment (134), wherein the pressure sensor (162) and the moisture sensor (160) are introduced into the sensor housing (116) independently of the electronics module (142), wherein the moisture sensor (160) and the pressure sensor (162) are adhesively bonded into the sensor housing on a first mounting level in the base area of the electronics compartment (134) below a second mounting level on which the electronics module (142) is arranged in the sensor housing (116), and wherein the moisture sensor (160) is integrated in a moisture module (164) and the moisture module is connected to a connector (172) of the plug-in sensor (114) by means of bonding wire connections.

## Revendications

1. Dispositif capteur (110) pour détecter au moins une propriété d'écoulement d'un milieu fluide, comprenant au moins un boîtier à capteurs (116), au moins un module électronique (142), au moins un capteur d'écoulement (152), au moins un capteur de pression (162) et au moins un capteur d'humidité (160), dans lequel le boîtier à capteurs comprend au moins une sonde enfichable qui peut être introduite dans le milieu fluide en écoulement, dans lequel au moins un module électronique (142) comportant au moins un capteur d'écoulement (152) pour détecter la propriété d'écoulement est logé dans le boîtier à capteurs (116), en particulier au moins une puce de mesure de masse d'air à film chaud, dans lequel au moins un capteur de pression (162) et au moins un capteur d'humidité (160) sont en outre logés à l'intérieur du boîtier à capteurs (116), dans lequel le boîtier à capteurs (116) comporte au moins un compartiment électronique (134), dans lequel le module électronique (142) est au moins partiellement logé dans le compartiment électronique (134), dans lequel le capteur de pression (162) et le capteur d'humidité (160) sont également disposés dans le compartiment électronique (134),
**caractérisé en ce que** le capteur de pression (162) et le capteur d'humidité (160) sont disposés dans le boîtier à capteurs (116) indépendamment du module électronique (142), dans lequel le capteur d'humidité (160) et le capteur de pression (162) sont collés dans le boîtier à capteurs, dans un premier plan de montage situé dans la zone de fond du compartiment électronique (134), en dessous d'un deuxième plan de montage dans lequel le module électronique (142) est disposé dans le boîtier à capteurs (116), et **en ce que** le capteur d'humidité (160) est intégré sur un module d'humidité (164) et le module d'humidité est relié par des fils de connexion à une fiche (172) de la sonde enfichable (114) .

2. Dispositif capteur (110) selon la revendication 1, dans lequel le module électronique (142) comprend un support de capteur (150), dans lequel le support de capteur (150) porte le capteur d'écoulement (152) et fait saillie hors du compartiment électronique (134) dans le boîtier à capteurs (116), dans au moins un canal (130) dans lequel peut s'écouler le milieu.

3. Dispositif capteur (110) selon l'une des revendications précédentes, dans lequel le boîtier à capteurs (116) présente au moins une ouverture de pression (176), en particulier au moins un raccord de pression (178), dans lequel le capteur de pression (162) est logé dans le boîtier à capteurs (116) de manière à ce qu'une pression du milieu fluide puisse lui être appliquée par l'intermédiaire de l'ouverture de pression (176).

4. Dispositif capteur (110) selon l'une des revendications précédentes, dans lequel le boîtier à capteurs (116) présente au moins une ouverture d'entrée (166) pour l'humidité, dans lequel le capteur d'humidité (160) est logé dans le boîtier à capteurs (116) de manière à ce qu'il puisse être exposé à l'humidité par l'intermédiaire de l'ouverture d'entrée (166).

5. Dispositif capteur (110) selon les revendications 3 et 4, dans lequel le compartiment électronique (134) est équipé du capteur de pression, du module d'humidité et du module électronique à partir d'un premier côté (124) du boîtier à capteurs (116), dans lequel l'ouverture de pression (176) et l'ouverture d'entrée (166) sont disposées sur un deuxième côté opposé (126).

6. Dispositif capteur (110) selon l'une des revendications précédentes, dans lequel le dispositif capteur (110) comporte en outre au moins un capteur de température (180), en particulier au moins une sonde de température (180) disposée sur un côté extérieur du boîtier à capteurs (116).

7. Procédé de fabrication d'un dispositif capteur (110) pour détecter au moins une propriété d'écoulement d'un milieu fluide selon l'une des revendications précédentes, dans lequel le dispositif capteur (110) comprend au moins un boîtier à capteurs (116), dans lequel le boîtier à capteurs comprend au moins une sonde enfichable qui peut être introduite dans le milieu fluide en écoulement, dans lequel au moins un module électronique (142) comportant au moins un capteur d'écoulement (152) pour détecter la propriété d'écoulement est introduit dans le boîtier à capteurs (116), dans lequel au moins un capteur de pression (162) et au moins un capteur d'humidité (160) sont en outre introduits dans le boîtier à capteurs (116), dans lequel le boîtier à capteurs (116) comporte au moins un compartiment électronique (134), dans lequel le module électronique (142) est au moins partiellement disposé dans le compartiment électronique (134), dans lequel le capteur de pression (162) et le capteur d'humidité (160) sont également disposés dans le compartiment électronique (134), dans lequel le capteur de pression (162) et le capteur d'humidité (160) sont introduits dans le boîtier à capteurs (116) indépendamment du module électronique (142), dans lequel le capteur d'humidité (160) et le capteur de pression (162) sont collés dans le boîtier à capteurs, dans un premier plan de montage situé dans la zone de fond du compartiment électronique (134), en dessous d'un deuxième plan de montage dans lequel le module électronique (142) est disposé dans le boîtier à capteurs (116), et dans lequel le capteur d'humidité (160) est intégré sur un module d'humidité (164) et le module d'humidité est relié par des fils de connexion à une fiche (172) de la sonde enfichable (114).
